# EUROPEAN PATENT APPLICATION

(11) **EP 3 748 917 A1**
(43) Date of publication of application: **09.12.2020**
(21) Application number: 19178212.7
(22) Date of filing: 04.06.2019
(51) Int. Cl.: H04L 12/28

(54) **METHOD FOR OPERATION OF A CENTRAL OFFICE POINT OF DELIVERY AND/OR FOR DISTRIBUTION AND/OR USE OF POLICY CONTROL INFORMATION WITHIN A BROADBAND ACCESS NETWORK OF A TELECOMMUNICATIONS NETWORK, TELECOMMUNICATIONS NETWORK, SYSTEM, AND CONTROL PLANE FUNCTION OR CONTROLLER NODE REALIZING A CONTROL PLANE FUNCTION OF A CENTRAL OFFICE POINT OF DELIVERY OF A TELECOMMUNICATIONS NETWORK, PROGRAM AND COMPUTER-READABLE MEDIUM**

(71) Applicant: Deutsche Telekom AG, 53113 Bonn (DE)
(72) Inventor: HAAG, Thomas, 63110 Rodgau (DE); KOLBE, Hans-Jörg, 64295 Darmstadt (DE); NAGEL, Björn, 13086 Berlin (DE); SZUPPA, Sabine, 15859 Storkow (Mark) (DE); HURST, Wolfgang, 63225 Langen (Hessen) (DE)
(74) Representative: Schwöbel, Thilo K.

(57) **Abstract**

The invention relates to a method for an improved and simplified operation of a central office point of delivery and/or for the enhanced distribution and/or use of policy control information, especially within the central office point of delivery and/or between network nodes external to the central office point of delivery, within a broadband access network of a telecommunications network,
wherein the central office point of delivery and/or the broadband access network comprises at least a service edge node or a service edge functionality, and a plurality of access nodes or a plurality of access node functionality instances,
wherein the broadband access network comprises a control plane function or a controller node realizing a control plane function, wherein the control plane function or the controller node realizing the control plane function implements a distributed policy enforcement regarding subscriber-related uplink and/or downlink user plane traffic within the broadband access network,
wherein - in order to establish a subscriber session between, on the one hand, a specific customer premises equipment being connected to the broadband access network, and, on the other hand, a specific service edge node or a specific service edge functionality, and using a specific access node or a specific access node functionality instance - the method comprises the following steps:
-- in a first step, a first policy information is transmitted, by the control plane function or the controller node realizing the control plane function, to the specific access node or the specific access node functionality instance, and a second policy information is transmitted, by the control plane function or the controller node realizing the control plane function, to the specific service edge node or to the specific service edge functionality,
-- in a second step, subsequent to the first step, a label information - indicated by the first policy information - is provided or attached, by the specific service edge node or the specific service edge functionality, to data packets of downstream user plane traffic being transmitted, by the specific service edge node or the specific service edge functionality, to the specific customer premises equipment as part of the subscriber session,
-- in a third step, subsequent to the second step, the label information of or attached to data packets of downstream user plane traffic is used by the specific access node or the specific access node functionality instance for policy enforcement in accordance to the second policy information.

## Description

### BACKGROUND

The present invention relates a method for an improved and simplified operation of a central office point of delivery and/or for the enhanced distribution and/or use of policy control information, especially within the central office point of delivery and/or between network nodes external to the central office point of delivery, within a broadband access network of a telecommunications network, wherein the central office point of delivery and/or the broadband access network comprises at least a service edge node or a service edge functionality, and a plurality of access nodes or a plurality of access node functionality instances.

Furthermore, the present invention relates to a telecommunications network for an improved and simplified operation of a central office point of delivery and/or for the enhanced distribution and/or use of policy control information, especially within the central office point of delivery and/or between network nodes external to the central office point of delivery, within a broadband access network of a telecommunications network, wherein the central office point of delivery and/or the broadband access network comprises at least a service edge node or a service edge functionality, and a plurality of access nodes or a plurality of access node functionality instances.

Additionally, the present invention relates to a system for an improved and simplified operation of a central office point of delivery and/or for the enhanced distribution and/or use of policy control information, especially within the central office point of delivery and/or between network nodes external to the central office point of delivery, within a broadband access network of a telecommunications network, wherein the central office point of delivery and/or the broadband access network comprises at least a service edge node or a service edge functionality, and a plurality of access nodes or a plurality of access node functionality instances.

Furthermore, the present invention relates to a control plane function or controller node realizing a control plane function of a central office point of delivery of an inventive telecommunications network or of an inventive system.

Additionally, the present invention relates to a corresponding program comprising a computer readable program code, and to a corresponding computer-readable medium.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

The present invention generally relates to broadband access network platforms such as in 5G or CORD (Central Office Re-architected as a Data Center), i.e. to the area of aggregation networks linking remote or central access nodes to a backbone network or core network of a telecommunications network.

Typically in such architectures, access nodes are multiplexing traffic to and from multiple subscribers on a shared medium (i.e. typically using links with limited bandwidth that are shared amongst these subscribers). The subscribers themselves can be terminated on different service edges or service edge nodes. In order to shape e.g. downstream traffic towards a passive optical network (PON) tree, those service edges or service edge nodes would need to coordinate in real time the available bandwidth with the current shaping rates, which would require considerable efforts.

Additionally, in many conventionally known deployments, exact packet accounting is needed, which would even increase efforts in case that service edges or service edge nodes would need to coordinate in this regard.

### SUMMARY

An object of the present invention is to provide a technically simple, effective and cost effective solution for an improved and simplified operation and architecture of a central office point of delivery, especially for the enhanced distribution and/or use of policy control information, especially within the central office point of delivery and/or between network nodes external to the central office point of delivery. A further object of the present invention is to provide a corresponding telecommunications network, a corresponding system, and a corresponding central office point of delivery, and especially a corresponding control plane function or controller node realizing a control plane function of a central office point of delivery.

The object of the present invention is achieved by a method for an improved and simplified operation of a central office point of delivery and/or for the enhanced distribution and/or use of policy control information, especially within the central office point of delivery and/or between network nodes external to the central office point of delivery, within a broadband access network of a telecommunications network,
wherein the central office point of delivery and/or the broadband access network comprises at least a service edge node or a service edge functionality, and a plurality of access nodes or a plurality of access node functionality instances,
wherein the broadband access network comprises a control plane function or a controller node realizing a control plane function, wherein the control plane function or the controller node realizing the control plane function implements a distributed policy enforcement regarding subscriber-related uplink and/or downlink user plane traffic within the broadband access network,
wherein - in order to establish a subscriber session between, on the one hand, a specific customer premises equipment being connected to the broadband access network, and, on the other hand, a specific service edge node or a specific service edge functionality, and using a specific access node or a specific access node functionality instance - the method comprises the following steps:
-- in a first step, a first policy information is transmitted , by the control plane function or the controller node realizing the control plane function, to the specific access node or the specific access node functionality instance, and a second policy informationis transmitted, by the control plane function or the controller node realizing the control plane function, to the specific service edge node or to the specific service edge functionality,
-- in a second step, subsequent to the first step, a label information - indicated by the first policy information - is provided or attached, by the specific service edge node or the specific service edge functionality, to data packets of downstream user plane traffic being transmitted, by the specific service edge node or the specific service edge functionality, to the specific customer premises equipment as part of the subscriber session,
-- in a third step, subsequent to the second step, the label information of or attached to data packets of downstream user plane traffic is used by the specific access node or the specific access node functionality instance for policy enforcement in accordance to the second policy information.

It is thereby advantageously possible according to the present invention to provide a fabric-internal (or central office point of delivery-internal) control communication between a policy decision point (typically the service edge or service edge node) and a policy enforcement point (typically the optical line terminal or optical line terminal node).

In a conventionally known broadband networks, the broadband network gateway (BNG) is typically a single service creation point. This service creation point is typically aware of the IP session and the flow (i.e. it is IP session-aware and flow-aware). This in turn makes it typically simple to apply service profiling/shaping/policing per subscriber flow.

In contrast, in central office point of delivery-based architectures of a telecommunications network, it is advantageous to separate access-based quality-of-service and service-related quality-of-service and flow/session control. For that purpose, it is proposed to introduce a fabric internal control communication between a policy decision point (typically the service edge or service edge node) and a policy enforcement point (typically the optical line terminal or optical line terminal node).

Hence according to the present invention, a communication flow and exchange of metadata is proposed, related to a subscriber handle ID (i.e. an identifier information) which is set at the time of authentication within the service edge or service edge node, and associate the OLT-specific PON-port in order to enable a proper flow treatment.

According to the present invention, the central office point of delivery and/or the broadband access network comprises at least a service edge node or a service edge functionality, and a plurality of access nodes or a plurality of access node functionality instances. According to the present invention, any kind of access nodes are able to be used, especially fixed access nodes or wireless access nodes or hybrid fixed and wireless access node or a plurality of fixed access nodes together with a plurality of wireless access nodes. In all these possible configurations according to the present invention, an access node is able to use the inventive mechanism.

Furthermore according to the present invention, the broadband access network comprises a control plane function or a controller node realizing a control plane function, wherein the control plane function or the controller node realizing the control plane function implements a distributed policy enforcement (or a distributed policy enforcement functionality) regarding subscriber-related uplink and/or downlink user plane traffic within the broadband access network.

In case that a subscriber session shall be established between, on the one hand, a specific customer premises equipment (being connected to the broadband access network), and, on the other hand, a specific service edge node or a specific service edge functionality (and using a specific access node or a specific access node functionality instance), the method comprises the following steps:
-- in a first step, a first policy information is transmitted (by the control plane function or the controller node realizing the control plane function, to the specific access node or the specific access node functionality instance), and a second policy information is transmitted (by the control plane function or the controller node realizing the control plane function, to the specific service edge node or to the specific service edge functionality),
-- in a second step, subsequent to the first step, a label information - indicated by the first policy information - is provided or attached (by the specific service edge node or the specific service edge functionality) to data packets of downstream user plane traffic being transmitted, by the specific service edge node or the specific service edge functionality, to the specific customer premises equipment as part of the subscriber session, and
-- in a third step, subsequent to the second step, the label information of or attached to data packets of downstream user plane traffic is used by the specific access node or the specific access node functionality instance for policy enforcement in accordance to the second policy information.

According to the present invention, it is thereby advantageously possible to have
-- multiple service edges or service edge nodes being connected to the same access node and common policing function (or common policing functionality) with the common policing function (or common policing functionality) serving all different types of service edges or service edge nodes, relieving them from providing the common policing function themselves, and additionally, it is also possible that
-- additional service edges (or service edge nodes) - e.g. in a foreign network, i.e. in a telecommunications network that is not controlled by the network operator of the considered telecommunications network, e.g. in a wholesale scenario - are connected to the access node and common policing function node (or common policing functionality node). Thus, there can be two types of service edges (or service edge nodes): internal service edges (or internal service edge nodes) for operator-internal services and external service edges (or external service edge nodes) for service edges residing in another operator's network.

According to the present invention, it is advantageously possible to realize a quality-of-service model such that an access node (i.e. typically any access node of the plurality of access nodes) multiplexes traffic to and from multiple subscribers on links with limited bandwidth that are shared amongst these subscribers, while it is possible that these subscribers are themselves terminated on different service edges (or service edge nodes). According to a conventional realization, in order to shape, e.g., downstream traffic towards a passive optical network tree (i.e. to different subscribers connected using such a tree), those service edges would need to coordinate in real time the available bandwidth with the current shaping rates which is more or less impossible or only achievable with quite substantial efforts.

Hence, according to the present invention, the traffic shaping is especially done in the access node (i.e. typically where the bottleneck might occur), e.g. and in case of a passive optical network, in an embedded common policing function or common policing functionality in the access node (e.g. the optical line terminal).

Further, in many deployments within broadband access networks, exact packet accounting is needed. As the exact traffic shaping should be avoided on a single service edge (or service edge node) in a multi-service edge deployment, accounting on such multiple service edges should also be avoided as the common policing function or common policing functionality may still drop frames due to possible congestion.

The telecommunications network according to the present invention might be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

Furthermore, it is advantageously possible and preferred according to the present invention that in a fourth step, subsequent to the first step, a further label information - indicated by the second policy information - is provided or attached, by the specific access node or the specific access node functionality instance, to data packets of upstream user plane traffic being transmitted , by the specific access node or the specific access node functionality instance, to the specific service edge node or to the specific service edge functionality as part of the subscriber session.

By means of the further label information - indicated by the second policy information -, it is advantageously possible to apply the inventive method also to upstream data packets, i.e. data packets of upstream user plane traffic.

Furthermore according to the present invention, it is preferred that establishing the subscriber session - between the specific customer premises equipment the specific service edge node or the specific service edge functionality - involves the specific service edge node or the specific service edge functionality requesting the authentication of the subscriber session, especially prior to the first step, from the control plane function or from the controller node realizing the control plane function.

Thereby, it is advantageously possible that the subscriber session is authenticated.

According to a further preferred embodiment of the present invention,
-- the distributed policy enforcement regarding subscriber-related uplink and/or downlink user plane traffic, and/or
-- the first policy information and/or the second policy information and/or the label information and/or the further label information
relate to or encode at least one out of the following:
-- traffic shaping,
-- the quality-of-service level to be applied, respectively, to a subscriber session and/or to a data packet or a stream of data packets,
-- performing accounting with regard to a subscriber session and/or a data packet or a stream of data packets.

Thereby, it is advantageously possible to easily and effectively realize the inventive method of an improved and simplified operation and architecture of a central office point of delivery.

According to a further embodiment of the present invention, the first policy information and/or the second policy information and/or the label information and/or the further label information provide in-band signaling of policy related information.

By means of using in-band signaling of policy-related information, it is advantageously possible according to the present invention to transmit such policy-related information in an efficient manner and without necessarily using an additional transmission path to transmit such policy-related information. According to one alternative realization of in-band signaling of policy-related information, an in-band signaling according to a narrower sense is used: According to such an alternative, one information field or a plurality of specific information fields, e.g. within a header information, are used to transmit the policy-related information. According to another alternative realization of in-band signaling of policy-related information, an in-band signaling according to a wider sense is used: According to such an alternative, a level of header information - e.g. MPLS header information - is added to respective data packets (either upstream or downstream) of user plane traffic in order to transmit the policy-related information.

According to still a further embodiment of the present invention,
-- the specific access node or the specific access node functionality instance comprises a common policing function or an entity or instance realizing a common policing function, wherein the first policy information is transmitted to the common policing function or to the entity or instance realizing the common policing function of the specific access node or the specific access node functionality instance and/or
-- the specific service edge node or the specific service edge functionality comprises a subscriber termination function or an entity or instance realizing a subscriber termination function, wherein the second policy information is transmitted to the subscriber termination function or to the entity or instance realizing the subscriber termination function of the specific service edge node or the specific service edge functionality.

By means of the specific access node or the specific access node functionality instance comprising a common policing function or an entity or instance realizing a common policing function, it is advantageously possible to realize the inventive method, and provide for an effective distribution and/or use of policy control information.

Likewise, by means of the specific service edge node or the specific service edge functionality comprises a subscriber termination function or an entity or instance realizing a subscriber termination function, it is advantageously possible to realize the inventive method, and provide for an effective distribution and/or use of policy control information.

According to a further embodiment of the present invention, the label information - indicated by the first policy information - is provided or attached, by the subscriber termination function or the entity or instance realizing the subscriber termination function, to data packets of downstream user plane traffic being transmitted, by the specific service edge node or the specific service edge functionality, to the specific customer premises equipment as part of the subscriber session, and/or wherein the label information of or attached to data packets of downstream user plane traffic is used by the common policing function or by an entity or instance realizing the common policing function for policy enforcement in accordance to the second policy information.

According to still a further embodiment of the present invention, the central office point of delivery or the broadband access network or a further telecommunications network comprises, at least a further service edge node or a further service edge functionality.

According to still a further embodiment of the present invention, the physical link of the broadband access network between the customer premises equipment and the plurality of access nodes or the plurality of access node functionality instances is or corresponds to or comprises a shared medium, especially a passive optical network.

Furthermore, the present invention relates to a telecommunications network for an improved and simplified operation of a central office point of delivery and/or for the enhanced distribution and/or use of policy control information, especially within the central office point of delivery and/or between network nodes external to the central office point of delivery, within a broadband access network of a telecommunications network, wherein the central office point of delivery and/or the broadband access network comprises at least a service edge node or a service edge functionality, and a plurality of access nodes or a plurality of access node functionality instances, wherein the broadband access network comprises a control plane function or a controller node realizing a control plane function, wherein the control plane function or the controller node realizing the control plane function implements a distributed policy enforcement regarding subscriber-related uplink and downlink user plane traffic within the broadband access network, wherein - in order to establish a subscriber session between, on the one hand, a specific customer premises equipment being connected to the broadband access network, and, on the other hand, a specific service edge node or a specific service edge functionality, and using a specific access node or a specific access node functionality instance - the telecommunications network is configured such that:
-- a first policy information is transmitted, by the control plane function or the controller node realizing the control plane function, to the specific access node or the specific access node functionality instance, and a second policy information is transmitted, by the control plane function or the controller node realizing the control plane function, to the specific service edge node or to the specific service edge functionality,
-- a label information - indicated by the first policy information - is provided or attached, by the specific service edge node or the specific service edge functionality, to data packets of downstream user plane traffic being transmitted, by the specific service edge node or the specific service edge functionality, to the specific customer premises equipment as part of the subscriber session,
-- the label information of or attached to data packets of downstream user plane traffic is used by the specific access node or the specific access node functionality instance for policy enforcement in accordance to the second policy information.

Furthermore, the present invention relates to a system for an improved and simplified operation of a central office point of delivery and/or for the enhanced distribution and/or use of policy control information, especially within the central office point of delivery and/or between network nodes external to the central office point of delivery, within a broadband access network of a telecommunications network, wherein the central office point of delivery and/or the broadband access network comprises at least a service edge node or a service edge functionality, and a plurality of access nodes or a plurality of access node functionality instances, wherein the broadband access network comprises a control plane function or a controller node realizing a control plane function, wherein the control plane function or the controller node realizing the control plane function implements a distributed policy enforcement regarding subscriber-related uplink and downlink user plane traffic within the broadband access network, wherein - in order to establish a subscriber session between, on the one hand, a specific customer premises equipment being connected to the broadband access network, and, on the other hand, a specific service edge node or a specific service edge functionality, and using a specific access node or a specific access node functionality instance - the system is configured such that:
-- a first policy information is transmitted, by the control plane function or the controller node realizing the control plane function, to the specific access node or the specific access node functionality instance, and a second policy information is transmitted, by the control plane function or the controller node realizing the control plane function, to the specific service edge node or to the specific service edge functionality,
-- a label information - indicated by the first policy information - is provided or attached, by the specific service edge node or the specific service edge functionality, to data packets of downstream user plane traffic being transmitted, by the specific service edge node or the specific service edge functionality, to the specific customer premises equipment as part of the subscriber session,
-- the label information of or attached to data packets of downstream user plane traffic is used by the specific access node or the specific access node functionality instance for policy enforcement in accordance to the second policy information.

Additionally, the present invention relates to a control plane function or controller node realizing a control plane function of a central office point of delivery of a telecommunications network according to claim 9 or of a system according to claim 10, wherein the control plane function or the controller node realizing the control plane function implements a distributed policy enforcement regarding subscriber-related uplink and downlink user plane traffic within the broadband access network.

Still additionally, the present invention relates to a program comprising a computer readable program code which, when executed on a computer and/or on a node within a central office point of delivery and/or on a control plane function or on a controller node realizing a control plane function of a central office point of delivery, or in part on a node within a central office point of delivery and/or in part on a control plane function or on a controller node realizing a control plane function of the central office point of delivery, causes the computer and/or the node within the central office point of delivery and/or the control plane function or the controller node realizing a control plane function of the central office point of delivery to perform an inventive method.

Furthermore, the present invention relates to a computer-readable medium comprising instructions which when executed on a computer and/or on a node within a central office point of delivery and/or on a control plane function or on a controller node realizing a control plane function of a central office point of delivery, or in part on a node within a central office point of delivery and/or in part on a control plane function or on a controller node realizing a control plane function of the central office point of delivery, causes the computer and/or the node within the central office point of delivery and/or the control plane function or the controller node realizing a control plane function of the central office point of delivery to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically illustrates a part of a broadband access network with a specific customer premises equipment being connected to the broadband access network, and using a specific service edge node or a specific service edge functionality and a further specific service edge node or a further specific service edge functionality
Figure 3 schematically illustrates a part of a broadband access network of an inventive telecommunications network with a central office point of delivery and a plurality of service edge nodes.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

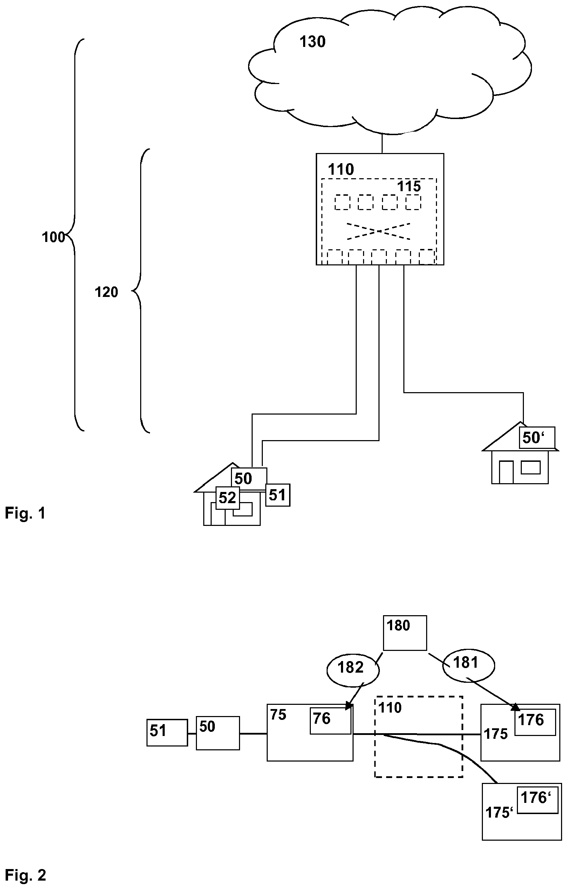

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a data center and that is especially handling different access requirements, especially different access possibilities, of the client devices 51, 52 to network functionalities provided by the telecommunications network 100 or via the telecommunications network 100. The client devices 51, 52 are typically connected to the logical or physical central office point of delivery 110 by means of a customer premises equipment device 50, 50' or by means of a customer premises equipment functionality that might be built in the client devices 51, 52. Preferably but not necessarily, the central office point of delivery 110 comprises a switching fabric 115 comprising a plurality of spine network nodes and typically also a plurality of leaf network nodes which are not explicitly represented in Figure 1.

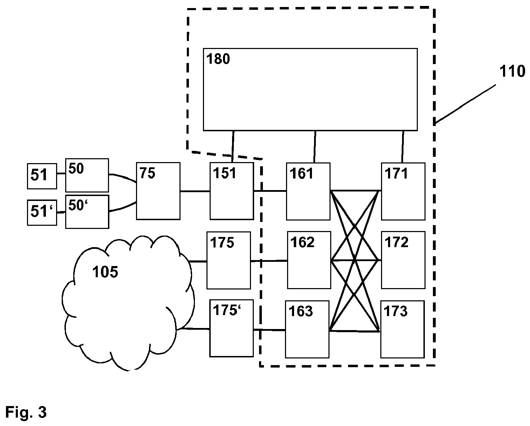

Figure 3 schematically illustrates a part of a broadband access network 120 of an inventive telecommunications network 100 with a central office point of delivery 110 and a plurality of service edge nodes 175, 175'. The central office point of delivery 110 is part of the broadband access network 120, wherein the represented part of the telecommunications network 100 comprises - besides a controller node 180 - a line termination node 151. The line termination node 151 represents a plurality of line termination nodes that is typically present in the broadband access network. Typically, each of the plurality of line termination nodes has one or a plurality of access node ports (not specifically illustrated in Figure 3). In the example represented in Figure 3, only one line termination node 151 (of the plurality of line termination nodes present in the broadband access network 120) is exemplarily represented. The (typically present plurality of) line termination node(s) might be provided to support different access technologies to a home gateway or customer premises equipment 50, 50'. In the exemplary embodiment shown in Figure 3, the represented line termination node 151 is exemplarily shown as a line termination node supporting to be connected, e.g., to an optical network, especially a passive optical network (PON) or point-to-point fiber, typically a so-called optical line terminal (OLT) or optical line terminal device. In such a situation, a client device 51 is connected to the telecommunications network 100 (i.e. to the (also called specific) line termination node 151) via the customer premises equipment 50 (or home gateway device 50) and a network termination node 75. The functionality of the customer premises equipment 50 (or home gateway device 50) and the functionality of the network termination node 75 might also be integrated in one device or "box". Even the functionality of the client device 51, the functionality of the customer premises equipment 50 (or home gateway device 50) and the functionality of the network termination node 75 might be integrated in one device or "box". Nevertheless, these functionalities are represented in Figure 3 as separate functionalities. In Figure 3, a second home gateway device 50' (or second customer premises equipment 50') is shown (and also a second client device 51'). However, only one network termination node 75 (i.e. a specific network termination node) is shown. However, also other line termination nodes might be connected to corresponding network termination nodes and customer premises equipments (that are not necessarily represented in Figure 3). In the context of the present invention, the network termination node 75 (or, more likely, the plurality of network termination nodes) is/are also called access node or access node functionality instance 75 (or, plurality of access nodes or of access node functionality instances). Furthermore, it is possible according to the present invention that the functionality of the network termination node 75 (or access node or access node functionality instance 75) and the functionality of the line termination node 151 might be integrated in one device or "box" or at least concentrated in one location or "cabinet". According to such an alternative embodiment of the present invention, such a combination of a network termination node 75 (or access node or access node functionality instance 75) and a line termination node 151 is then called access node or access node functionality instance 75 (or network termination node 75).

In the context of the present invention, in order to separate the "specific" or considered entities from the other entities of the same kind within the broadband access network 120, the line termination node 151 is also called the specific line termination node 151, the network termination node 75 connected to the line termination node 151 is also called the specific network termination node 75, and the customer premises equipment 50 connected to the specific network termination node 75 is also called the specific customer premises equipment.

In case of the line termination nodes having a plurality of access node ports, also a plurality of network termination nodes are able to be connected to one line termination node and/or (in case that a network termination node has a plurality of ports) also a plurality of customer premises equipments are able to be connected to one network termination node.

Hence, Figure 3 schematically shows a typical setup of a central office point of delivery 110. The specific customer premises equipment 50 (or specific home gateway 50) is connected, via the access node or access node functionality instance 75 - or via the specific optical network terminal or the specific network termination node 75, and, if applicable, also via the specific optical line terminal (or the specific line termination node 151) - to a leaf switch 161 (of a plurality of leaf switches 161, 162, 163) which is especially dual-homed at a plurality of spine switches 171, 172, 173. In the exemplary embodiment shown in Figure 3, the functionality of a service edge node is realized by the plurality of external service edge nodes 175, 175'. Hence, the spine switch functionality is in this case separated from the service edge functionality and vice versa, i.e. the service edge function or functionality resides in a different node (than the spine switch functionality), this different node being located especially external to the central office point of delivery.

According to the present invention, a method for an improved and simplified operation of a central office point of delivery 110 and/or for the enhanced distribution and/or use of policy control information, especially within the central office point of delivery 110 and/or between network nodes external to the central office point of delivery 110, is provided. The central office point of delivery 110 and/or the broadband access network 120 comprises at least a service edge node or a service edge functionality 175, and a plurality of access nodes or a plurality of access node functionality instances 75 (also called network termination nodes). The broadband access network 120 further comprises a control plane function or a controller node realizing a control plane function 180, wherein the control plane function or the controller node realizing the control plane function 180 implements a distributed policy enforcement regarding subscriber-related uplink and/or downlink user plane traffic within the broadband access network 120.

In order to establish a subscriber session between, on the one hand, a specific customer premises equipment 50 being connected to the broadband access network 120, and, on the other hand, a specific service edge node or a specific service edge functionality 175, and using a specific access node or a specific access node functionality instance 75,
-- a first policy information 181 (transmitted by the control plane function or the controller node realizing the control plane function 180 to the specific access node or the specific access node functionality instance 75), and/or
-- a second policy information 182 (transmitted by the control plane function or the controller node realizing the control plane function 180 to the specific service edge node or to the specific service edge functionality 175)
is used for communication and enforcing a policy corresponding to both the customer premises equipment 50, and the current situation within the broadband access network 120. The first and second policy information 181, 182 are distributed (or transmitted), by the control plane function or the controller node realizing the control plane function 180, to the respective nodes or instances. By means of the first and second policy information, 181, 182, the respective nodes or instances (especially the specific access node or the specific access node functionality instance 75, and the specific service edge node or to the specific service edge functionality 175) are able to communicate by means of labelling actual data packets transmitted therebetween. E.g., a downstream data packet (i.e. a data packet of downstream user plane traffic) is typically first handled by the specific service edge node or to the specific service edge functionality 175 before being handled by the specific access node or the specific access node functionality instance 75. For a upstream data packet (i.e. a data packet of upstream user plane traffic), it is the other way around, i.e. it is typically first handled by the specific access node or the specific access node functionality instance 75 before being handled by the specific service edge node or to the specific service edge functionality 175.

According to the present invention and regarding downstream data packets, a label information - indicated by the first policy information 181 - is provided or attached, by the specific service edge node or the specific service edge functionality 175, to such data packets of downstream user plane traffic that are transmitted to the specific customer premises equipment 50 as part of the subscriber session, and the label information of or attached to such data packets (of downstream user plane traffic) is used by the specific access node or the specific access node functionality instance 75 for policy enforcement in accordance to the second policy information 182.

Likewise according to the present invention and regarding upstream data packets, a further label information - indicated by the second policy information 182 - is provided or attached, by the specific access node or the specific access node functionality instance 75, to such data packets of upstream user plane traffic that are transmitted to the specific service edge node or to the specific service edge functionality 175 as part of the subscriber session, and, especially, the further label information of or attached to such data packets (of upstream user plane traffic) is used by the specific service edge node or to the specific service edge functionality 175 for policy enforcement in accordance to the first policy information 181.

In Figure 2, a part of a broadband access network 120 with a specific customer premises equipment 50, being connected to the broadband access network 120, and using a specific service edge node or a specific service edge functionality 175 and a further specific service edge node or a further specific service edge functionality 175' is schematically shown. Especially, the further specific service edge functionality 175' is a service edge functionality which is external to the network of the operator of the telecommunications network 100. The customer premises equipment 50 is connected to the broadband access network 120 via the specific access node functionality (or access node instance) 75. A control plane function or a controller node realizing a control plane function 180 distributes or transmits a first policy information 181 to the specific access node or the specific access node functionality instance 75, and a second policy information 182 to the specific service edge node or to the specific service edge functionality 175.

In the exemplary representation of Figure 2, the specific access node or the specific access node functionality instance 75 comprises a common policing function or an entity or instance realizing the common policing function 76. Furthermore, the specific service edge node or to the specific service edge functionality 175 comprises a subscriber termination function or an entity or instance realizing the subscriber termination function 176. Likewise, the further service edge node or to the further service edge functionality 175' comprises a further subscriber termination function or an entity or instance realizing the further subscriber termination function 176'.

According to the present invention, the service edge nodes or service edge functionalities (or service edge instances) need to classify all downstream packets (data packets of downstream user plane traffic) and identify in which queue of which subscriber they need to be put in. Further, all such data packets need to be classified into the correct accounting class for the actual subscriber (i.e. the specific customer premises equipment 50). If the specific service edge node or service edge functionality (or service edge instance) 175 does not implement this, the specific access node or the specific access node functionality (or access node instance) 75 which hosts the common policing function 76 would need to implement those complex functions, resulting either in the necessity to quite importantly increase the performance of such nodes or entities, or to an increased risk of functional overload on those rather standard nodes or entities.

According to the present invention, it is especially preferred that the common policing function 76 hosts all possible quality-of-service and accounting policies (potentially to be applied in view of or regarding the connected entities or nodes, especially subscribers or corresponding customer premises equipments 50).

It is furthermore preferred according to the present invention that a control plane function 180 instructs (by means of transmitting the second policy information 182) the specific access node or the specific access node functionality (or access node instance) 75 - especially the common policing function or an entity or instance realizing the common policing function 76, typically as part of the specific access node or the specific access node functionality (or access node instance) 75 - upon establishment of a subscriber session in a sense that it configures the policies listening to the headers denoting the subscriber tunnel (e.g. a combination of VLAN headers and/or MPLS SR labels). While such information is sufficient in order to cross-connect the subscribers' traffic into the access connection at the specific access node or the specific access node functionality (or access node instance) 75 such as a GEM port, it does not provide sufficient information for accounting and traffic shaping.

According to the present invention, the common policing function or an entity or instance realizing the common policing function 76 also needs to be configured to put incoming traffic inside the tunnel into the right queues and accounting bucket (by means of applying the second policy information 182). The present invention proposes (and the second policy information 182 is applied or processed correctly) by means of an additional packet header (i.e. the label information) such as, e.g., a segment routing MPLS label that describes, for the incoming data packet, which queue it should be put in as well as which accounting bucket ID it needs to be assigned to. According to the present invention, all this happens on a per-subscriber level, i.e. for each customer connected to the specific access node or the specific access node functionality (or access node instance) 75.

In a rather analogous manner, it is also preferred according to the present invention that the control plane function 180 instructs (by means of transmitting the first policy information 181) the specific service edge node or service edge functionality (or service edge instance) 175 - especially the subscriber termination function or an entity or instance realizing the subscriber termination function 176, typically as part of the specific service edge node or service edge functionality (or service edge instance) 175 - upon establishment of a subscriber session in a sense that it configures the policies listening to the headers denoting the subscriber tunnel (e.g. a combination of VLAN headers and/or MPLS SR labels).

According to the present invention, the subscriber termination function or an entity or instance realizing the subscriber termination function 176 also needs to be configured to put incoming traffic inside the tunnel into the right queues and accounting bucket (by means of applying the first policy information 181). The present invention proposes (and the first policy information 181 is applied or processed correctly) by means of an additional packet header (i.e. the label information) such as, e.g., a segment routing MPLS label that describes, for the incoming data packet, which queue it should be put in as well as which accounting bucket ID it needs to be assigned to. According to the present invention, all this happens on a per-subscriber level, i.e. for each customer connected to the specific service edge node or service edge functionality (or service edge instance) 175.

In a preferred embodiment according to the present invention, a subscriber session such as a point-to-point-protocol over Ethernet tunnel (PPPoE tunnel) is being terminated in a service edge function (i.e. the specific service edge node or service edge functionality (or service edge instance) 175) at the subscriber termination function which acts as the endpoint of the point-to-point-protocol over Ethernet tunnel (PPPoE endpoint). On the path to the specific service edge node or service edge functionality (or service edge instance) 175, the layer 2 tunnels carrying the subscriber sessions pass a physical access node (i.e. the specific access node or the specific access node functionality (or access node instance) 75) as well as possibly a common policing function (CPF) which is able to be implemented inside the specific access node or the specific access node functionality (or access node instance) 75.

Referring again to Figure 2, according to the present invention, in a first processing step, the point-to-point-protocol over Ethernet session (PPPoE session), i.e. the subscriber session, is set up between the customer premises equipment 50 and the subscriber termination function 176 (or the specific service edge node or service edge functionality (or service edge instance) 175). In parallel the subscriber termination function 176 queries the control plane 180 in a further processing step. Once authentication is done, the control plane 180 installs policies (by means of transmitting the first and second policy information 181, 182) in both:
-- the specific access node or the specific access node functionality (or access node instance) 75, and
-- the specific service edge node or service edge functionality (or service edge instance) 175,
in two points. The policies are installed at the specific access node or the specific access node functionality (or access node instance) 75 (i.e. typically at the common policing function) for accounting and quality-of-service, and at the specific service edge node or service edge functionality (or service edge instance) 175 (i.e. typically at the subscriber termination function 176) for all functions to be provided on the point-to-point-protocol over Ethernet session (PPPoE session) including packet classification for quality-of-service and accounting. When

In step 2, the control plane 180 choses the policy to apply for accounting and quality-of-service on the common policing function 76 and instructs it to connect it to all frames in the tunnel carrying the subscriber session.

In the following, a simple example is given:
L2 tunnel: VLAN 66/77, SR label 5678
accounting class 5 map premium_bucket
QoS class 1 map strict priority

The corresponding classification rules are being installed/activated on the subscriber termination function 176:
L2 tunnel: VLAN 66/77, SR label 5678
IP source 10.10.1.1/16 accounting class 5
IP source 10.10.1.1/16 QoS class 1

According to this example, any data packet coming from network 10.10.1.1 will be labelled as belonging to accounting class 5 and QoS class 1. The subscriber termination function 176 will add an additional label to the protocol stack of the downstream data packets mapping these values into it.

As an example, the first 4 bits could be used for quality-of-service class while bits 4-8 may be used for the accounting class.

When the common policing function (or entity or instance realizing the common policing function) 76 receives the data packets (that are labelled in such a manner), because of the configuration mapping configured in the specific access node or the specific access node functionality (or access node instance) 75 (or, rather, the common policing function or an entity or instance realizing the common policing function 76), it can directly put the data packets into the right queues and perform the packet/byte counting in the correct bucket, and this on a per subscriber basis.

According to all embodiments of the present invention, it is especially advantageous that it is not required to do any deep packet classification at the entity downstream (in the direction of flow of the data packets), i.e. in this case at the common policing function (or entity or instance realizing the common policing function) 76 because this has already been done at the subscriber termination function or an entity or instance realizing the subscriber termination function 176.

Example for such a class to header mapping in a more complex scenario using a label of 20 bit (i.e. the label information comprises 20 bits):
5 bit - 0-4-> QoS Classification (0-31 possible QoS queues)
8 bit - 5-12 -> Accounting Class per User (0-255 possible Accounting classes)
4 bit - 13-16 -> Accounting Class Global (0-15 possible global accounting classes)
3 bit - 17-19 -> Group Identifier (0-7 possible Groups)

According to the present invention, it is possible to provide upstream policing and accounting in the the specific service edge node or service edge functionality (or service edge instance) 175 (both, classification and policy enforcement). The additional headers may be omitted or used but with a default setting since no information is to be conveyed in that direction.

Hence, according to the present invention, a distributed policy enforcement scenario is able to be implemented where the control plane instructs two enforcement points, one is for classification and the other is for actual action on the traffic while metadata is encoded in additional packet headers and the use of the metadata is provisioned on both points by a central control plane entity. In this respect, a predefined set of metadata containing relation to subscriber and service is able to be implemented as well as steering logic for service related distribution of policy decision points & policy enforcement points information (PDP - PEP information) within a central office point of delivery. It is especially advantageous that a dynamic control is possible to be implemented based on dynamic policy interfaces of the control plane 180 with the subscriber termination function 176 and the common policy function 76.

## Claims

1. Method for an improved and simplified operation of a central office point of delivery (110) and/or for the enhanced distribution and/or use of policy control information, especially within the central office point of delivery (110) and/or between network nodes external to the central office point of delivery (110), within a broadband access network (120) of a telecommunications network (100),
wherein the central office point of delivery (110) and/or the broadband access network (120) comprises at least a service edge node or a service edge functionality (175), and a plurality of access nodes or a plurality of access node functionality instances (75),
wherein the broadband access network (120) comprises a control plane function or a controller node realizing a control plane function (180), wherein the control plane function or the controller node realizing the control plane function (180) implements a distributed policy enforcement regarding subscriber-related uplink and/or downlink user plane traffic within the broadband access network (120),
wherein - in order to establish a subscriber session between, on the one hand, a specific customer premises equipment (50) being connected to the broadband access network (120), and, on the other hand, a specific service edge node or a specific service edge functionality (175), and using a specific access node or a specific access node functionality instance (75) - the method comprises the following steps:
-- in a first step, a first policy information (181) is transmitted, by the control plane function or the controller node realizing the control plane function (180), to the specific access node or the specific access node functionality instance (75), and a second policy information (182) is transmitted, by the control plane function or the controller node realizing the control plane function (180), to the specific service edge node or to the specific service edge functionality (175),
-- in a second step, subsequent to the first step, a label information - indicated by the first policy information (181) - is provided or attached, by the specific service edge node or the specific service edge functionality (175), to data packets of downstream user plane traffic being transmitted, by the specific service edge node or the specific service edge functionality (175), to the specific customer premises equipment (50) as part of the subscriber session,
-- in a third step, subsequent to the second step, the label information of or attached to data packets of downstream user plane traffic is used by the specific access node or the specific access node functionality instance (75) for policy enforcement in accordance to the second policy information (182).

2. Method according to claim 1, wherein in a fourth step, subsequent to the first step, a further label information - indicated by the second policy information (182) - is provided or attached, by the specific access node or the specific access node functionality instance (75), to data packets of upstream user plane traffic being transmitted, by the specific access node or the specific access node functionality instance (75), to the specific service edge node or to the specific service edge functionality (175) as part of the subscriber session.

3. Method according to one of the preceding claims, wherein establishing the subscriber session - between the specific customer premises equipment (50) the specific service edge node or the specific service edge functionality (175)
- involves the specific service edge node or the specific service edge functionality (175) requesting the authentication of the subscriber session, especially prior to the first step, from the control plane function or from the controller node realizing the control plane function (180).

4. Method according to one of the preceding claims, wherein
-- the distributed policy enforcement regarding subscriber-related uplink and/or downlink user plane traffic, and/or
-- the first policy information (181) and/or the second policy information (182) and/or the label information and/or the further label information
relate to or encode at least one out of the following:
-- traffic shaping,
-- the quality-of-service level to be applied, respectively, to a subscriber session and/or to a data packet or a stream of data packets,
-- performing accounting with regard to a subscriber session and/or a data packet or a stream of data packets.

5. Method according to one of the preceding claims, wherein the first policy information (181) and/or the second policy information (182) and/or the label information and/or the further label information provide inband signaling of policy related information.

6. Method according to one of the preceding claims, wherein
-- the specific access node or the specific access node functionality instance (75) comprises a common policing function or an entity or instance realizing a common policing function (76), wherein the first policy information (181) is transmitted to the common policing function or to the entity or instance realizing the common policing function (76) of the specific access node or the specific access node functionality instance (75)
and/or
-- the specific service edge node or the specific service edge functionality (175) comprises a subscriber termination function or an entity or instance realizing a subscriber termination function (176), wherein the second policy information (182) is transmitted to the subscriber termination function or to the entity or instance realizing the subscriber termination function (176) of the specific service edge node or the specific service edge functionality (175).

7. Method according to one of the preceding claims, wherein the label information - indicated by the first policy information (181) - is provided or attached, by the subscriber termination function or the entity or instance realizing the subscriber termination function (176), to data packets of downstream user plane traffic being transmitted, by the specific service edge node or the specific service edge functionality (175), to the specific customer premises equipment (50) as part of the subscriber session, and/or
wherein the label information of or attached to data packets of downstream user plane traffic is used by the common policing function or by an entity or instance realizing the common policing function (76) for policy enforcement in accordance to the second policy information (182).

8. Method according to one of the preceding claims, wherein the central office point of delivery (110) or the broadband access network (120) or a further telecommunications network (200) comprises, at least a further service edge node or a further service edge functionality (175').

9. Method according to one of the preceding claims, wherein the physical link of the broadband access network (120) between the customer premises equipment (50) and the plurality of access nodes or the plurality of access node functionality instances (75) is or corresponds to or comprises a shared medium, especially a passive optical network.

10. Telecommunications network (100) for an improved and simplified operation of a central office point of delivery (110) and/or for the enhanced distribution and/or use of policy control information, especially within the central office point of delivery (110) and/or between network nodes external to the central office point of delivery (110), within a broadband access network (120) of a telecommunications network (100),
wherein the central office point of delivery (110) and/or the broadband access network (120) comprises at least a service edge node or a service edge functionality (175), and a plurality of access nodes or a plurality of access node functionality instances (75),
wherein the broadband access network (120) comprises a control plane function or a controller node realizing a control plane function (180), wherein the control plane function or the controller node realizing the control plane function (180) implements a distributed policy enforcement regarding subscriber-related uplink and downlink user plane traffic within the broadband access network (120),
wherein - in order to establish a subscriber session between, on the one hand, a specific customer premises equipment (50) being connected to the broadband access network (120), and, on the other hand, a specific service edge node or a specific service edge functionality (175), and using a specific access node or a specific access node functionality instance (75) - the telecommunications network (100) is configured such that:
-- a first policy information (181) is transmitted, by the control plane function or the controller node realizing the control plane function (180), to the specific access node or the specific access node functionality instance (75), and a second policy information (182) is transmitted, by the control plane function or the controller node realizing the control plane function (180), to the specific service edge node or to the specific service edge functionality (175),
-- a label information - indicated by the first policy information (181)- is provided or attached, by the specific service edge node or the specific service edge functionality (175), to data packets of downstream user plane traffic being transmitted, by the specific service edge node or the specific service edge functionality (175), to the specific customer premises equipment (50) as part of the subscriber session,
-- the label information of or attached to data packets of downstream user plane traffic is used by the specific access node or the specific access node functionality instance (75) for policy enforcement in accordance to the second policy information (182).

11. System for an improved and simplified operation of a central office point of delivery (110) and/or for the enhanced distribution and/or use of policy control information, especially within the central office point of delivery (110) and/or between network nodes external to the central office point of delivery (110), within a broadband access network (120) of a telecommunications network (100),
wherein the central office point of delivery (110) and/or the broadband access network (120) comprises at least a service edge node or a service edge functionality (175), and a plurality of access nodes or a plurality of access node functionality instances (75),
wherein the broadband access network (120) comprises a control plane function or a controller node realizing a control plane function (180), wherein the control plane function or the controller node realizing the control plane function (180) implements a distributed policy enforcement regarding subscriber-related uplink and downlink user plane traffic within the broadband access network (120),
wherein - in order to establish a subscriber session between, on the one hand, a specific customer premises equipment (50) being connected to the broadband access network (120), and, on the other hand, a specific service edge node or a specific service edge functionality (175), and using a specific access node or a specific access node functionality instance (75) - the system is configured such that:
-- a first policy information (181) is transmitted, by the control plane function or the controller node realizing the control plane function (180), to the specific access node or the specific access node functionality instance (75), and a second policy information (182) is transmitted, by the control plane function or the controller node realizing the control plane function (180), to the specific service edge node or to the specific service edge functionality (175),
-- a label information - indicated by the first policy information (181)- is provided or attached, by the specific service edge node or the specific service edge functionality (175), to data packets of downstream user plane traffic being transmitted, by the specific service edge node or the specific service edge functionality (175), to the specific customer premises equipment (50) as part of the subscriber session,
-- the label information of or attached to data packets of downstream user plane traffic is used by the specific access node or the specific access node functionality instance (75) for policy enforcement in accordance to the second policy information (182).

12. Control plane function or controller node realizing a control plane function (180) of a central office point of delivery (110) of a telecommunications network (100) according to claim 9 or of a system according to claim 10, wherein the control plane function or the controller node realizing the control plane function (180) implements a distributed policy enforcement regarding subscriber-related uplink and downlink user plane traffic within the broadband access network (120).

13. Program comprising a computer readable program code which, when executed on a computer and/or on a node within a central office point of delivery (110) and/or on a control plane function or on a controller node realizing a control plane function (180) of a central office point of delivery (110), or in part on a node within a central office point of delivery (110) and/or in part on a control plane function or on a controller node realizing a control plane function (180) of the central office point of delivery (110), causes the computer and/or the node within the central office point of delivery (110) and/or the control plane function or the controller node realizing a control plane function (180) of the central office point of delivery (110) to perform a method according one of claims 1 to 9.

14. Computer-readable medium comprising instructions which when executed on a computer and/or on a node within a central office point of delivery (110) and/or on a control plane function or on a controller node realizing a control plane function (180) of a central office point of delivery (110), or in part on a node within a central office point of delivery (110) and/or in part on a control plane function or on a controller node realizing a control plane function (180) of the central office point of delivery (110), causes the computer and/or the node within the central office point of delivery (110) and/or the control plane function or the controller node realizing a control plane function (180) of the central office point of delivery (110) to perform a method according one of claims 1 to 9.
